# EUROPÄISCHE PATENTSCHRIFT

(11) **EP 3 687 852 B1**
(45) Veröffentlichungstag und Bekanntmachung des Hinweises auf die Patenterteilung: **08.09.2021**
(21) Anmeldenummer: 18742441.1
(22) Anmeldetag: 12.07.2018
(51) Int. Cl.: B60N 2/02, A63G 31/16, G09B 9/02

(54) **VERFAHREN ZUM STEUERN EINER SITZVORRICHTUNG EINES KRAFTFAHRZEUGS BEI BETRIEB EINER VIRTUELLEN-REALITÄT-ANWENDUNG SOWIE SITZVORRICHTUNG**
METHOD FOR CONTROLLING A SEATING APPARATUS OF A MOTOR VEHICLE WHEN OPERATING A VIRTUAL REALITY APPLICATION, AND SEATING APPARATUS
PROCÉDÉ DE COMMANDE D'UN DISPOSITIF DE SIÈGE D'UN VÉHICULE AUTOMOBILE LORS DU FONCTIONNEMENT D'UNE APPLICATION DE RÉALITÉ VIRTUELLE ET DISPOSITIF DE SIÈGE

(30) Priorität: 28.09.2017 DE 102017009090
(43) Veröffentlichungstag der Anmeldung: 05.08.2020
(73) Patentinhaber: Audi AG, 85045 Ingolstadt (DE)
(72) Erfinder: HEIDESTER, Wolfgang, 93326 Abensberg (DE)
(86) Internationale Anmeldenummer: PCT/EP2018/068885
(87) Internationale Veröffentlichungsnummer: WO 2019/063157

(56) Entgegenhaltungen:
- WO-A1-2016/197068
- US-A1- 2014 220 545
- US-A1- 2017 253 252

## Beschreibung

Die Erfindung betrifft ein Verfahren zum Betreiben einer Sitzvorrichtung eines Kraftfahrzeugs bei Betrieb einer Virtuellen-Realität-Anwendung sowie eine Sitzvorrichtung, die durch ein derartiges Verfahren betreibbar ist.

Schwenkbare Sitzvorrichtungen zur Verwendung innerhalb von Kraftfahrzeugen, die mit fahrdynamischen Sensoren gekoppelt sind, sind aus dem Stand der Technik bekannt.

Hierbei werden die Sitzvorrichtungen in Abhängigkeit der auf einen Fahrzeuginsassen wirkenden Kräfte derart angesteuert und bewegt, dass die auf den Fahrzeuginsassen wirkenden Kräfte reduzierbar sind.

Insbesondere in Bezug auf das autonome Fahren von Kraftfahrzeugen, also das selbsttätige Bewegen des Kraftfahrzeugs, ohne Eingriff des Fahrzeuginsassen, ist es dem Fahrzeuginsassen während des Transfers ermöglicht, Arbeitstätigkeiten oder Freizeittätigkeiten nachzugehen. Hierbei sind sowohl im Bereich der Arbeitstätigkeiten als auch der Freizeittätigkeiten so genannte Virtuelle-Realitäten-Anwendungen bekannt, bei denen ein Benutzer beispielsweise eine Brille oder Dergleichen aufzieht, die ein bildschirmartiges Anzeigeelement umfasst und dem Benutzer eine virtuelle Räumlichkeit darstellt.

Bei der Anwendung von Virtuellen-Realitäten-Anwendungen hat es sich als nachteilig erwiesen, dass beim Transfer innerhalb eines Kraftfahrzeugs die auf den Fahrzeuginsassen bzw. auf den Benutzer der Virtuellen-Realität-Anwendung Beschleunigungskräfte, Fliehkräfte und Schwerkrafteffekte wirken, die durch den menschlichen Gleichgewichtssinn wahrgenommen werden und bei dem Fahrzeuginsassen bzw. bei dem Benutzer Seekrankheit auslösen. Aus der WO2016197068 ist ein Verfahren zum Betreiben einer Sitzvorrichtung eines Kraftfahrzeugs bei Betrieb einer Virtuellen-Realität-Anwendung durch einen im Kraftfahrzeug angeordneten Anwender in einem parkenden Fahrzeug bekannt.

Eine Aufgabe eines Ausführungsbeispiels der Erfindung ist, ein Verfahren zum Steuern einer Sitzvorrichtung eines Kraftfahrzeugs bei Betrieb einer Virtuellen-Realität-Anwendung sowie eine Sitzvorrichtung vorzuschlagen, bei der die Gefahr des Entstehens von Seekrankheit reduziert ist.

Diese Aufgabe wird gelöst durch ein Verfahren zum Betreiben einer Sitzvorrichtung eines Kraftfahrzeugs bei Betrieb einer Virtuellen-Realität-Anwendung durch einen im Kraftfahrzeug angeordneten Anwender während einer Bewegung oder Beschleunigung des Kraftfahrzeugs, wobei die Sitzvorrichtung mindestens eine Sitzeinheit, mindestens einen Antrieb zum Bewegen der Sitzeinheit und mindestens eine Steuereinrichtung umfasst, der funktional eine Sensoreinheit des Kraftfahrzeugs zuordenbar oder zugeordnet ist, und wobei die Sitzvorrichtung mit der Virtuellen-Realität-Anwendung verbunden ist, die mindestens eine Recheneinheit umfasst, mit den Schritten:
a. Erfassen mindestens eines realen IST-Werts zumindest einer Bewegung oder Beschleunigung des Kraftfahrzeugs durch die der Steuereinrichtung funktional zugeordnete Sensoreinheit und Weiterleiten des realen IST-Werts der Bewegung oder Beschleunigung des Kraftfahrzeugs an die Steuereinrichtung;
b. Erfassen und/oder Berechnen eines simulierten virtuellen IST-Werts zumindest einer Bewegung oder Beschleunigung innerhalb der Virtuellen-Realität-Anwendung durch die Recheneinheit und Weiterleiten des virtuellen IST-Werts der Bewegung oder Beschleunigung innerhalb der Virtuellen-Realität-Anwendung an die Steuereinrichtung;
c. Berechnen eines realen SOLL-Werts einer Korrekturbewegung oder Korrekturbeschleunigung durch die Sitzeinheit in Abhängigkeit des realen IST-Werts der Bewegung oder Beschleunigung des Kraftfahrzeugs, derart, dass die Überlagerung von Korrekturbewegung oder Korrekturbeschleunigung durch die Sitzeinheit und Bewegung oder Beschleunigung des Kraftfahrzeugs im Wesentlichen in Betrag und Richtung dem virtuellen IST-Wert der Bewegung oder Beschleunigung innerhalb der Virtuellen-Realität-Anwendung entspricht;
d. Ansteuern des Antriebs der Sitzeinheit durch die Steuereinrichtung in Abhängigkeit zumindest des SOLL-Werts zum Ausführen der Korrekturbewegung oder Korrekturbeschleunigung durch die Sitzeinheit.

Der reale IST-Wert der Bewegung des Kraftfahrzeugs kann sowohl Betrag und Richtung der Bewegung des Kraftfahrzeugs umfassen. Entsprechendes gilt für den virtuellen IST-Wert der Bewegung innerhalb der Virtuellen-Realität-Anwendung.

Durch die Korrekturbewegung werden die auf den Fahrzeuginsassen wirkenden Beschleunigungskräfte des Kraftfahrzeugs für die Virtuelle-Realität-Anwendung verwendet oder ausgeglichen.

Wenn beispielsweise innerhalb der Virtuellen-Realität-Anwendung eine Bewegung simuliert wird, werden die auf das Kraftfahrzeug wirkenden Beschleunigungskräfte zumindest teilweise für die Virtuelle-Realität-Anwendung verwendet und durch die Korrekturbewegung der Sitzeinheit in Betrag und Richtung derart ergänzt, dass auf den Fahrzeuginsassen bzw. den Benutzer reale Beschleunigungskräfte wirken, die der simulierten IST-Bewegung innerhalb der Virtuellen-Realität-Anwendung entspricht. Hierdurch stimmen Gleichgewichtssinn der auf den Benutzer wirkenden reale Bewegung bzw. Beschleunigung und simulierte Bewegung bzw. Beschleunigung überein.

Wenn der Fahrzeuginsasse bzw. der Benutzer innerhalb der Virtuellen-Realität-Anwendung keine Bewegung simuliert, kann durch die Korrekturbewegung, die auf dem Fahrzeuginsassen wirkenden Bewegungen oder Beschleunigungskräfte ausgeglichen werden, so dass der Fahrzeuginsasse bzw. der Benutzer durch sein Gleichgewichtssinn keine Bewegung spürt.

Es erweist sich als vorteilhaft, wenn das Erfassen des mindestens einen realen IST-Werts der Bewegung oder Beschleunigung des Kraftfahrzeugs durch die der Steuereinrichtung funktional zugeordnete Sensoreinheit durch ein erstes Sensormittel der Sensoreinheit erfolgt, wie Bewegungs- oder Beschleunigungssensor und/oder Gyroskop.

Hierdurch lassen sich auf einfache Weise die Bewegung des Kraftfahrzeugs und die auf den Fahrzeuginsassen wirkenden Beschleunigungskräfte erfassen und bestimmen.

Grundsätzlich ist es denkbar, dass das Verfahren aufgrund der Lage und Ausrichtung der Sitzeinheit eine Lage und Orientierung der Virtuellen-Realität-Anwendung bestimmt. Die Qualität des Verfahrens lässt sich weiter steigern, wenn das Verfahren den Schritt eines Erfassens der Lage und der Orientierung der Virtuellen-Realität-Anwendung umfasst, insbesondere einer virtuellen Blickrichtung, durch ein zweites Sensormittel der Sensoreinheit und/oder der Virtuellen-Realität-Anwendung, wie Bewegung oder Beschleunigungssensor, Beschleunigungssensor, Kompass und/oder Gyroskop.

Solchenfalls ist die Virtuelle-Realität-Anwendung von der Sitzeinheit, insbesondere der Lage und Orientierung der Sitzeinheit, entkoppelt.

Es erweist sich als vorteilhaft, wenn das Erfassen des mindestens einen realen IST-Werts der Bewegung oder Beschleunigung des Kraftfahrzeugs ein Erfassen der Lage, Orientierung und Bewegungs- und/oder Beschleunigungsrichtung des Kraftfahrzeugs mittels eines Navigationsmittels, wie Global Positioning System, Kompass oder Radar, umfasst, welches an die Steuereinrichtung weiterleitbar ist, umfasst.

Das Koppeln zwischen der Recheneinheit und der Steuereinrichtung kann grundsätzlich beliebig erfolgen. Es erweist sich als vorteilhaft, wenn das Weiterleiten des virtuellen IST-Werts der Bewegung oder Beschleunigung innerhalb der virtuellen Realität Anwendung an die Steuereinrichtung mittels einer Kabelverbindung zwischen Recheneinheit und Steuereinrichtung und/oder kabellos, insbesondere funkgebunden, erfolgt.

Die Ausgleichsbewegung kann grundsätzlich beliebig erfolgen. Um den Gleichgewichtssinn ein realitätsnahes Simulieren der Beschleunigungskräfte erfahrbar zu machen, erweist es sich als vorteilhaft, wenn die Korrekturbewegung oder Korrekturbeschleunigung durch die Sitzeinheit ein Drehen um eine Hoch-, Quer- und/oder Längsachse des Kraftfahrzeugs umfasst und/oder wenn die Korrekturbewegung oder Beschleunigung durch die Sitzeinheit ein Bewegen der Sitzeinheit entlang der Hoch-, Quer- und/oder Längsachse des Kraftfahrzeugs umfasst.

Durch die Drehbarkeit der Sitzeinheit um die Hoch-, Quer- und/oder Längsachse des Kraftfahrzeugs, ist die Sitzeinheit innerhalb des Kraftfahrzeugs frei beweglich. Beispielsweise ist es denkbar, dass die Sitzeinheit kardanisch aufgehängt ist.

Wenn die Sitzeinheit in Hoch-, Quer- und/oder entlang der Längsachse bewegbar ist, ist die Sitzeinheit innerhalb des Fahrzeuginnenraums bewegbar und Unebenheiten beim Bewegen des Kraftfahrzeugs, beispielsweise durch Bodenwellen, ausgleichbar.

Darüber hinaus erweist es sich bei einer Ausführungsform des Verfahrens als vorteilhaft, wenn das Verfahren den Schritt eines Überführens der Sitzeinheit in eine Lage und Orientierung aufweist, bei der die Blickrichtung der Virtuellen-Realität-Anwendung der Bewegungsrichtung des Kraftfahrzeugs entspricht.

Schließlich ist bei einer Ausführungsform des Verfahrens vorgesehen, dass dieses den Schritt eines Ansteuerns der Virtuellen-Realität-Anwendung durch mindestens ein Eingabemittel umfasst, insbesondere zum Simulieren einer virtuellen Bewegung oder Beschleunigung innerhalb der Virtuellen-Realität-Anwendung. Hierbei kann das Eingabemittel beispielsweise einen Joy-Stick oder Dergleichen umfassen. Ferner ist es denkbar, dass im Falle eines autonomen Bewegens des Kraftfahrzeugs, das im Kraftfahrzeug vorhandene Lenkrad sowie die Gas-, Brems- und/oder Kupplungs-Pedale als Eingabemittel für die Virtuelle-Realität-Anwendung dienen. Solchenfalls sind das Lenkrad und die Pedale vom Kraftfahrzeug entkoppelt und greifen nicht in die Bewegung des Kraftfahrzeugs in Form von Steuerbefehlen und Dergleichen ein.

Schließlich wird die Aufgabe gelöst durch eine Sitzvorrichtung eines Kraftfahrzeugs, die durch ein Verfahren mit mindestens einen der zuvor genannten Merkmale betreibbar ist, die mindestens eine Sitzeinheit, die mindestens einen Antrieb zum Bewegen, insbesondere Drehen um mindestens eine Achse, der Sitzeinheit und die mindestens eine Steuereinrichtung umfasst, der funktional eine Sensoreinheit des Kraftfahrzeugs zuordenbar oder zugeordnet ist, wobei die Sitzvorrichtung mit mindestens einer Virtuellen-Realität-Anwendung verbindbar verbunden ist, welche mindestens eine Recheneinheit umfasst.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Verfahrens und der Sitzvorrichtung.

In der Zeichnung zeigt:
- Figur 1: Eine schematische Draufsicht auf ein Kraftfahrzeug mit einer Sitzvorrichtung;
- Figur 2: Eine schematisches Ablaufdiagramm eines Verfahrens zum Betreiben einer Sitzvorrichtung

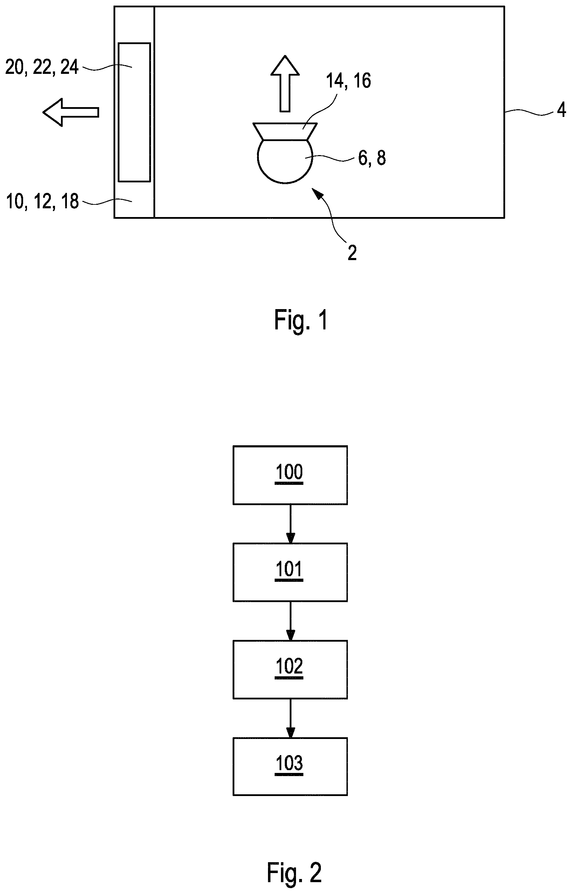

Figur 1 zeigt eine schematische Darstellung einer insgesamt mit dem Bezugszeichen 2 versehene Sitzvorrichtung eines Kraftfahrzeugs 4. Die Sitzvorrichtung 2 umfasst eine Sitzeinheit 6 und einen Antrieb 8 zum Bewegen der Sitzeinheit 6. Darüber hinaus umfasst die Sitzvorrichtung 2 des Kraftfahrzeugs 4 eine Steuereinrichtung 10, der funktional eine Sensoreinheit 12 des Kraftfahrzeugs 4 zugeordnet ist. Darüber hinaus ist die Sitzvorrichtung 2 des Kraftfahrzeugs 4 mit einer Virtuellen-Realität-Anwendung 14 verbunden, welche ihrerseits mindestens eine Recheneinheit 16 umfasst.

Die Sitzvorrichtung 2 gemäß Figur 1 wird im Folgenden näher durch ein Verfahren zum Betreiben der Sitzvorrichtung 2 in einem schematischen Ablaufdiagramm gemäß Figur 2 näher beschrieben:
In einem ersten Schritt 100 wird ein realer IST-Wert einer Bewegung oder Beschleunigung des Kraftfahrzeugs 4 durch eine der Steuereinrichtung 10 funktional zugeordneten Sensoreinheit 18 erfasst und an die Steuereinrichtung 10 weitergeleitet.

Das Erfassen des mindestens einen realen IST-Werts der Bewegung oder der Beschleunigung des Kraftfahrzeugs 4 kann beispielsweise durch ein erstes Sensormittel 20 der Steuereinrichtung 10 erfolgen. Dieses erste Sensormittel 20 kann beispielsweise einen Bewegungs- oder Beschleunigungssensor, einen Kompass und/oder ein Gyroskop umfassen.

Darüber hinaus kann das Erfassen des mindestens einen realen IST-Werts der Bewegung oder Beschleunigung des Kraftfahrzeugs 4 ein Erfassen der Lage, Orientierung und Bewegung oder Beschleunigungsrichtung des Kraftfahrzeugs 4 mittels eines Navigationsmittels 22, wie Global Positioning System (GPS) oder Radar, umfassen. Sowohl die Daten des ersten Sensormittels 20 als auch die Daten des Navigationsmittels 22 sind an die Steuereinrichtung 10 weiterleitbar.

In einem anschließenden Schritt 101 wird ein virtueller IST-Wert einer Bewegung oder Beschleunigung innerhalb der Virtuellen-Realität-Anwendung 14 durch die Recheneinheit 16 erfasst oder berechnet und an die Steuereinrichtung 10 weitergeleitet. Hierbei kann zusätzlich die Lage und die Orientierung der Virtuellen-Realität-Anwendung 14 durch ein zweites Sensormittel 24 der Sensoreinheit 18 erfasst werden.

In einem anschließenden Schritt 102 wird innerhalb der Steuereinrichtung 10 ein realer SOLL-Wert einer Korrekturbewegung oder Korrekturbeschleunigung durch die Sitzeinheit 6 berechnet. Dieser SOLL-Wert ist in Abhängigkeit des realen IST-Werts der Bewegung oder Beschleunigung des Kraftfahrzeugs 4 derart, dass die Überlagerung von Korrekturbewegung oder Korrekturbeschleunigung durch die Sitzeinheit 6 und die Bewegung oder Beschleunigung des Kraftfahrzeugs 4 im Wesentlichen in Betrag und Richtung den virtuellen IST-Wert der Bewegung oder Beschleunigung innerhalb der Virtuellen-Realität-Anwendung 14 entspricht.

In einem anschließenden Schritt 103 wird der Antrieb 8 der Sitzeinheit 6 durch den SOLL-Wert angesteuert. Dieses erfolgt durch die Steuereinrichtung 10, um die Korrekturbewegung oder Korrekturbeschleunigung durch die Sitzeinheit 6 auszuführen.

Die Korrekturbewegung oder Korrekturbeschleunigung durch die Sitzeinheit 4 kann durch Drehen um eine Hoch-, Quer- und/oder Längsachse des Kraftfahrzeugs 4 erfolgen oder durch ein Bewegen der Sitzeinheit 6 entlang der Hoch-, Quer- und/oder Längsachse des Kraftfahrzeugs 4.

Das Weiterleiten der virtuellen IST-Werte der Bewegung oder Beschleunigung innerhalb der Virtuellen-Realität-Anwendung 14 an die Steuereinrichtung 10 kann mittels einer Kabelverbindung erfolgen oder funkgebunden durchgeführt werden.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein, soweit dadurch nicht vom Schutzbereichs der Ansprüche abgewichen wird.

### BEZUGSZEICHENLISTE

- 2: Sitzvorrichtung
- 4: Kraftfahrzeug
- 6: Sitzeinheit
- 8: Antrieb
- 10: Steuereinrichtung
- 12: Sensoreinheit
- 14: Virtuelle-Realität-Anwendung
- 16: Recheneinheit
- 18: Sensoreinheit
- 20: erstes Sensormittel
- 22: Navigationsmittel
- 24: zweites Sensormittel

- 100- 103: Verfahrensschritte

## Patentansprüche

1. Verfahren zum Betreiben einer Sitzvorrichtung (2) eines Kraftfahrzeugs (4) bei Betrieb einer Virtuellen-Realität-Anwendung (14) durch einen im Kraftfahrzeug (4) angeordneten Anwender während einer Bewegung oder Beschleunigung des Kraftfahrzeugs (4), wobei die Sitzvorrichtung (2) mindestens eine Sitzeinheit (6), mindestens einen Antrieb (8) zum Bewegen der Sitzeinheit (6) und mindestens eine Steuereinrichtung (10) umfasst, der funktional eine Sensoreinheit (12) des Kraftfahrzeugs (4) zuordenbar oder zugeordnet ist, und wobei die Sitzvorrichtung (2) mit der Virtuellen-Realität-Anwendung (14) verbunden ist, die mindestens eine Recheneinheit (16) umfasst, mit den Schritten:
a. Erfassen mindestens eines realen IST-Werts der Bewegung oder Beschleunigung des Kraftfahrzeugs (4) durch die der Steuereinrichtung (10) funktional zugeordnete Sensoreinheit (12) und Weiterleiten des realen IST-Werts der Bewegung oder Beschleunigung des Kraftfahrzeugs (4) an die Steuereinrichtung (10);
b. Erfassen und/oder Berechnen eines simulierten virtuellen IST-Werts zumindest einer Bewegung oder Beschleunigung innerhalb der Virtuellen-Realität-Anwendung (14) durch die Recheneinheit (16) und Weiterleiten des virtuellen IST-Werts der Bewegung oder Beschleunigung innerhalb der Virtuellen-Realität-Anwendung (14) an die Steuereinrichtung (10);
c. Berechnen eines realen SOLL-Werts einer Korrekturbewegung oder Korrekturbeschleunigung durch die Sitzeinheit (6) in Abhängigkeit des realen IST-Werts der Bewegung oder Beschleunigung des Kraftfahrzeugs (4), derart, dass die Überlagerung von Korrekturbewegung oder Korrekturbeschleunigung durch die Sitzeinheit (6) und Bewegung oder Beschleunigung des Kraftfahrzeugs (4) im Wesentlichen in Betrag und Richtung dem virtuellen IST-Wert der Bewegung oder Beschleunigung innerhalb der Virtuellen-Realität-Anwendung (14) entspricht;
d. Ansteuern des Antriebs (8) der Sitzeinheit (6) durch die Steuereinrichtung (10) in Abhängigkeit zumindest des SOLL-Werts zum Ausführen der Korrekturbewegung oder Korrekturbeschleunigung durch die Sitzeinheit (6).

2. Verfahren nach Anspruch 1, **dadurch gekennzeichnet, dass** das Erfassen des mindestens einen realen IST-Werts der Bewegung oder Beschleunigung des Kraftfahrzeugs (4) durch die der Steuereinrichtung (10) funktional zugeordnete Sensoreinheit (18) durch ein erstes Sensormittel (20) der Sensoreinheit (18) erfolgt, wie Bewegungs- oder Beschleunigungssensor und/oder Gyroskop.

3. Verfahren nach Anspruch 1 oder 2, **dadurch gekennzeichnet, dass** das Erfassen des mindestens einen realen IST-Werts der Bewegung oder Beschleunigung des Kraftfahrzeugs (4) ein Erfassen der Lage, Orientierung und Bewegungs- und/oder Beschleunigungsrichtung des Kraftfahrzeugs (4) mittels eines Navigationsmittels (22), wie Global Positioning System, Kompass oder Radar, umfasst, welches an die Steuereinrichtung (10) weiterleitbar ist.

4. Verfahren nach mindestens einem der vorhergehenden Ansprüche, **gekennzeichnet durch** ein Erfassen der Lage und der Orientierung der Virtuellen-Realität-Anwendung (14), insbesondere einer virtuellen Blickrichtung, durch ein zweites Sensormittel (24) der Sensoreinheit (12) und/oder der Virtuellen-Realität-Anwendung (14), wie Bewegungs- oder Beschleunigungssensor, Kompass und/oder Gyroskop.

5. Verfahren nach mindestens einem der vorhergehenden Ansprüche, **dadurch gekennzeichnet, dass** das Weiterleiten des virtuellen IST-Werts der Bewegung oder Beschleunigung innerhalb der Virtuellen-Realität-Anwendung (14) an die Steuereinrichtung (10) mittels einer Kabelverbindung zwischen Recheneinheit (16) und Steuereinrichtung (10) und/oder kabellos, insbesondere funkgebunden, erfolgt.

6. Verfahren nach mindestens einem der vorhergehenden Ansprüche, **dadurch gekennzeichnet, dass** die Korrekturbewegung oder Korrekturbeschleunigung durch die Sitzeinheit (6) ein Drehen um eine Hoch-, Quer- und/oder Längsachse des Kraftfahrzeugs (4) umfasst und/oder dass die Korrekturbewegung oder Beschleunigung durch die Sitzeinheit (6) ein Bewegen der Sitzeinheit (6) entlang der Hoch-, Quer und/oder Längsachse des Kraftfahrzeugs (4) umfasst.

7. Verfahren nach mindestens einem der vorhergehenden Ansprüche, **gekennzeichnet durch** Überführen der Sitzeinheit (6) in eine Lage und Orientierung, bei der die Blickrichtung der Virtuellen-Realität-Anwendung (14) der Bewegungsrichtung des Kraftfahrzeugs (4) entspricht.

8. Verfahren nach mindestens einem der vorhergehenden Ansprüche, **gekennzeichnet durch** Ansteuern der Virtuellen-Realität-Anwendung (14) durch mindestens ein Eingabemittel, insbesondere zum Simulieren einer virtuellen Bewegung oder Beschleunigung innerhalb der Virtuellen-Realität-Anwendung (14).

9. Verfahren nach einem der vorhergehenden Ansprüche, welches während eines autonomen Bewegens des Kraftfahrzeugs (4) durchgeführt wird.

10. Sitzvorrichtung (2) eines Kraftfahrzeugs (4), die durch ein Verfahren nach einem der Ansprüche 1 bis 9 betreibbar ist, die mindestens eine Sitzeinheit (6), die mindestens einen Antrieb (8) zum Bewegen der Sitzeinheit (6) und die mindestens eine Steuereinrichtung (10) umfasst, der funktional eine Sensoreinheit (18) des Kraftfahrzeugs (4) zuordenbar oder zugeordnet ist, wobei die Sitzvorrichtung (2) mit mindestens einer Virtuellen-Realität-Anwendung (14) verbunden ist, welche mindestens eine Recheneinheit (16) umfasst.

## Claims

1. Method for operating a seating device (2) of a motor vehicle (4) when a virtual reality application (14) is operated by a user arranged in a motor vehicle (4) during a movement or acceleration of the motor vehicle (4), wherein the seating device (2) comprises at least one seating unit (6), at least one drive (8) for moving the seating unit (6) and at least one control apparatus (10), which is or can be functionally assigned to a sensor unit (12) of the motor vehicle (4), and wherein the seating device (2) is linked to the virtual reality application (14), which comprises at least one computing unit (16), including the steps of:
a. Detecting at least one real ACTUAL value of the movement or acceleration of the motor vehicle (4) by the sensor unit (12) functionally assigned to the control apparatus (10) and transmitting the real ACTUAL value of the movement or acceleration of the motor vehicle (4) to the control apparatus (10),
b. Detecting and/or calculating a simulated virtual ACTUAL value of at least one movement or acceleration within the virtual reality application (14) by the computing unit (16) and transmitting the virtual ACTUAL value of the movement or acceleration within the virtual reality application (14) to the control apparatus (10),
c. Calculating a real SETPOINT value of a correction movement or correction acceleration by the seating unit (6) depending on the real ACTUAL value of the movement or acceleration of the motor vehicle (4), such that the superimposition of correction movement or correction acceleration by the seating unit (6) and movement or acceleration of the motor vehicle (4) substantially corresponds in terms of magnitude and direction to the virtual ACTUAL value of the movement or acceleration within the virtual reality application (14),
d. Actuating the drive (8) of the seating unit (6) by the control apparatus (10) depending at least on the SETPOINT value to perform the correction movement or correction acceleration by the seating unit (6).

2. Method according to claim 1, **characterised in that** detection of the at least one real ACTUAL value of the movement or acceleration of the motor vehicle (4) by the sensor unit (18) functionally assigned to the control apparatus (10) takes places by means of a first sensor means (20) of the sensor unit (18), such as a movement or acceleration sensor and/or gyroscope.

3. Method according to claim 1 or 2, **characterised in that** detection of the at least one real ACTUAL value of the movement or acceleration of the motor vehicle (4) comprises a detection of the position, orientation and movement and/or acceleration direction of the motor vehicle (4) by means of a navigation means (22), such as a global positioning system, compass or radar, which can be transmitted to the control apparatus (10).

4. Method according to at least one of the preceding claims, **characterised by** a detection of the position and orientation of the virtual reality application (14), in particular a virtual viewpoint, by a second sensor means (24) of the sensor unit (12) and/or the virtual reality application (14), such as a movement or acceleration sensor, compass and/or gyroscope.

5. Method according to at least one of the preceding claims, **characterised in that** transmission of the virtual ACTUAL value of the movement or acceleration within the virtual reality application (14) to the control apparatus (10) takes place by means of a cable link between the computing unit (16) and control apparatus (10) and/or wirelessly, in particular by means of radio communication.

6. Method according to at least one of the preceding claims, **characterised in that** the correction movement or correction acceleration by the seating unit (6) comprises a rotation about a vertical, lateral and/or longitudinal axis of the motor vehicle (4) and/or that the correction movement or acceleration by the seating unit (6) comprises a movement of the seating unit (6) along the vertical, lateral and/or longitudinal axis of the motor vehicle (4).

7. Method according to at least one of the preceding claims, **characterised by** a transfer of the seating unit (6) into a position and orientation, in which the viewpoint of the virtual reality application (14) corresponds to the movement direction of the motor vehicle (4).

8. Method according to at least one of the preceding claims, **characterised by** actuation of the virtual reality application (14) by at least one input means, in particular for simulating a virtual movement or acceleration within the virtual reality application (14).

9. Method according to any of the preceding claims, which is implemented during an autonomous movement of the motor vehicle (4).

10. Seating device (2) of a motor vehicle (4), which can be operated by a method according to any of claims 1 to 9, which comprises at least one seating unit (6), the at least one drive (8) for moving the seating unit (6) and the at least one control apparatus (10), which is or can be functionally assigned to a sensor unit (18) of the motor vehicle (4), wherein the seating device (2) is linked to at least one virtual reality application (14), which comprises at least one computing unit (16).

## Revendications

1. Procédé pour faire fonctionner un dispositif de siège (2) d'un véhicule automobile (4) lorsqu'une application de réalité virtuelle (14) est actionnée par un utilisateur disposé dans le véhicule automobile (4) pendant un mouvement ou une accélération du véhicule automobile (4), dans lequel le dispositif de siège (2) comprend au moins une unité de siège (6), au moins un entraînement (8) pour déplacer l'unité de siège (6) et au moins un appareil de commande (10) auquel une unité de détection (12) du véhicule automobile (4) peut être affectée fonctionnellement ou est affectée, et dans lequel le dispositif de siège (2) est relié à l'application de réalité virtuelle (14) qui comprend au moins une unité de calcul (16), avec les étapes consistant à :
a. détecter au moins une valeur actuelle réelle du mouvement ou de l'accélération du véhicule automobile (4) par l'unité de détection (12) affectée fonctionnellement à l'appareil de commande (10) et transmettre la valeur actuelle réelle du mouvement ou de l'accélération du véhicule automobile (4) à l'appareil de commande (10) ;
b. acquérir et/ou calculer une valeur actuelle virtuelle simulée d'au moins un mouvement ou d'une accélération dans l'application de réalité virtuelle (14) par l'unité de calcul (16) et transmettre la valeur actuelle virtuelle du mouvement ou de l'accélération dans l'application de réalité virtuelle (14) à l'appareil de commande (10) ;
c. calculer une valeur de consigne réelle d'un mouvement de correction ou d'une accélération de correction par l'unité de siège (6) en fonction de la valeur actuelle réelle du mouvement ou de l'accélération du véhicule automobile (4) de telle sorte que la superposition du mouvement de correction ou de l'accélération de correction par l'unité de siège (6) et du mouvement ou de l'accélération du véhicule automobile (4) corresponde sensiblement en quantité et en direction à la valeur actuelle virtuelle du mouvement ou de l'accélération dans l'application de réalité virtuelle (14) ;
d. commander l'entraînement (8) de l'unité de siège (6) par l'appareil de commande (10) en fonction d'au moins la valeur de consigne pour effectuer le mouvement de correction ou l'accélération de correction par l'unité de siège (6).

2. Procédé selon la revendication 1, **caractérisé en ce que** la détection de ladite au moins une valeur actuelle réelle du mouvement ou de l'accélération du véhicule automobile (4) par l'unité de détection (18) associée fonctionnellement à l'appareil de commande (10) est effectuée par un premier moyen de détection (20) de l'unité de détection (18), tel qu'un détecteur de mouvement ou d'accélération et/ou un gyroscope.

3. Procédé selon la revendication 1 ou 2, **caractérisé en ce que** la détection de ladite au moins une valeur actuelle réelle du mouvement ou de l'accélération du véhicule automobile (4) comprend la détection de la position, de l'orientation et de la direction du mouvement et/ou de l'accélération du véhicule automobile (4) au moyen d'un moyen de navigation (22), tel qu'un système de positionnement global, une boussole ou un radar, qui peut être transmis à l'appareil de commande (10).

4. Procédé selon au moins l'une des revendications précédentes, **caractérisé par** la détection de la position et de l'orientation de l'application de réalité virtuelle (14), en particulier d'une direction de vision virtuelle, par un second moyen de détection (24) de l'unité de détection (12) et/ou de l'application de réalité virtuelle (14), tel qu'un détecteur de mouvement ou d'accélération, une boussole et/ou un gyroscope.

5. Procédé selon au moins l'une des revendications précédentes, **caractérisé en ce que** la transmission de la valeur actuelle virtuelle du mouvement ou de l'accélération dans l'application de réalité virtuelle (14) à l'appareil de commande (10) est effectuée au moyen d'une liaison par câble entre l'unité de calcul (16) et l'appareil de commande (10) et/ou est sans fil, en particulier par liaison radio.

6. Procédé selon au moins l'une quelconque des revendications précédentes, **caractérisé en ce que** le mouvement de correction ou l'accélération de correction par l'unité de siège (6) comprend une rotation autour d'un axe vertical, transversal et/ou longitudinal du véhicule automobile (4), et/ou **en ce que** le mouvement de correction ou l'accélération par l'unité de siège (6) comprend un mouvement de l'unité de siège (6) le long de l'axe vertical, transversal et/ou longitudinal du véhicule automobile (4).

7. Procédé selon au moins l'une des revendications précédentes, **caractérisé par** le transfert de l'unité de siège (6) dans une position et une orientation dans lesquelles la direction de vision de l'application de réalité virtuelle (14) correspond à la direction de déplacement du véhicule automobile (4).

8. Procédé selon au moins l'une quelconque des revendications précédentes, **caractérisé par** une commande de l'application de réalité virtuelle (14) est commandée par au moins un moyen d'entrée, en particulier pour simuler un mouvement virtuel ou une accélération virtuelle au sein de l'application de réalité virtuelle (14).

9. Procédé selon l'une quelconque des revendications précédentes, qui est mis en œuvre lors d'un déplacement autonome du véhicule automobile (4).

10. Dispositif de siège (2) d'un véhicule automobile (4) qui peut être actionné par un procédé selon l'une des revendications 1 à 9, qui comprend au moins une unité de siège (6) qui comprend au moins un entraînement (8) pour déplacer l'unité de siège (6) et ledit au moins un appareil de commande (10) qui peut être ou est associé fonctionnellement à une unité de détection (18) du véhicule automobile (4), dans lequel le dispositif de siège (2) est relié à au moins une application de réalité virtuelle (14) qui comprend au moins une unité de calcul (16).
